# EUROPEAN PATENT SPECIFICATION

(11) **EP 3 478 745 B1**
(45) Date of publication and mention of the grant of the patent: **24.02.2021**
(21) Application number: 17740510.7
(22) Date of filing: 21.06.2017
(51) Int. Cl.: C08G 65/30, C07C 41/34

(54) **PROCESSES AND SYSTEMS FOR REMOVING WATER AND SALT FROM A NEUTRALIZED POLYETHER POLYOL**
VERFAHREN UND SYSTEME ZUR ENTFERNUNG VON WASSER UND SALZ AUS EINEM NEUTRALISIERTEN POLYETHERPOLYOL
PROCÉDÉS ET SYSTÈMES POUR ÉLIMINER L'EAU ET LE SEL D'UN POLYOL DE POLYÉTHER NEUTRALISÉ

(30) Priority: 30.06.2016 US 201662356881 P
(43) Date of publication of application: 08.05.2019
(73) Proprietor: Covestro LLC, Pittsburgh, PA 15205 (US)
(72) Inventor: DUNN, Andrew L., Moundsville West Virginia 26041 (US); MCLAUGHLIN, Glenn, Hurricane West Virginia 25526 (US); PUZICHA, Gisbert, 41542 Dormagen (DE); MATHENY, Lydle S., Troy West Virginia 26443 (US); LAW, Garry L., New Martinsville West Virginia 26155-9614 (US)
(74) Representative: Levpat
(86) International application number: PCT/US2017/038517
(87) International publication number: WO 2018/005191

(56) References cited:
- EP-A1- 2 669 312
- WO-A1-01/88015
- WO-A1-2010/145899
- WO-A1-2015/091471
- US-A- 2 751 419
- A. DE LUCAS ET AL: "An Improved Method for the Purification of Polyether-Polyols Using Phosphoric Acid as Neutralization Agent", ORGANIC PROCESS RESEARCH AND DEVELOPMENT, vol. 3, 1999, pages 166-171, XP002773596,

## Description

### FIELD

The present invention is directed to, among other things, processes and systems for removing water and salt from a neutralized poly ether polyol.

### BACKGROUND

Polyether polyols are often manufactured using a catalyzed reaction of initiators having active hydrogen atoms with epoxides such as, for example, ethylene oxide and/or propylene oxide. Alkalinity is introduced into the polyether polyols, for example, by using alkaline metal hydroxides as catalysts.

Potassium hydroxide (KOH) and sodium hydroxide (NaOH) are some examples of typical alkaline catalysts used. In general, the metal hydroxide catalyst is added to the starter (usually a hydroxyl group containing compound), and equilibrium between the metal hydroxide and the starter occurs. This equilibrium is as shown in the following equation (using KOH as the alkaline catalyst):

KOH + ROH ↔ H₂O + RO⁻K⁺

Both the hydroxide and the alkoxide can react with epoxides. This is often acceptable for short chain (low molecular weight) polyols, but the reaction of water is undesirable in the preparation of long chain (i.e., high molecular weight) polyols. It is therefore, necessary to force the above equilibrium to the right by removing the water (i.e., dewatering). This converts all of the hydroxide to alkoxide. The total amount of alkalinity remains constant and is equal to the amount of KOH originally added.

Once the polymerization of the epoxide(s) is completed, the alkaline catalyst is typically neutralized, thereby producing a salt, and removed from the crude mixture to yield the final polyether polyol. Several processes for the removal of water and salts from the crude polyether polyols to yield the final product are known, many of which are costly and time consuming. In a batch distillation process, for example, the crude polyether polyol is distilled in the neutralization vessel, under atmospheric pressure and/or vacuum conditions, to remove water. The dewatered polyether polyol is then discharged and passed through a filter to remove the salt. In these processes, filtration is started after distillation is complete to ensure maximum crystal growth.

Other processes include, for example, the use of immiscible extracting compounds that are a polyol or a polyol mixture, the treatment of crude poly ether polyols with a synthetic type adsorbent followed by filtration of the polyol, the use of ion exchange resins, extraction with water, and the use of lactic acid. All of these methods have disadvantages from, for example, a complexity, cost and/or ecological perspective. A method for working up alkaline polyether polyol products is disclosed in WO-A-2015/091471.

Accordingly, an object of the present invention was to provide simple, cost-effective, safe and efficient means of removing water and salt from a neutralized polyether polyol.

### SUMMARY OF THE INVENTION

The present invention is directed to processes for removing water and salt from a neutralized polyether polyol. as described in the present claims These processes comprise: (a) removing a portion of the water from the neutralized polyether polyol under at least atmospheric pressure to produce a neutralized and partially dewatered crude polyether polyol mixture in a neutralization vessel; (b) transferring the neutralized and partially dewatered crude polyether polyol mixture from the neutralization vessel to a hold vessel; (c) transferring the neutralized and partially dewatered crude polyether polyol mixture from the hold vessel through a filter to produce a filtrate of the neutralized and partially dewatered crude polyether polyol mixture; and (d) passing the filtrate through an evaporator to remove additional water from the filtrate under and recirculating the polyether polyol exiting the evaporator to the hold vessel if the polyether polyol has a water content of more than a predetermined value, preferably 500 ppm when measured according to ASTM D4672(2012).

In other respects, the present invention is directed to systems for removing water and alkaline catalyst salts from a polyether as described in the present claims. These systems comprise: (a) a neutralization vessel comprising: (i) a polyether polyol, (ii) water, and (iii) alkaline catalyst; (b) a source of neutralizing agent, such as acid, in fluid communication with an inlet of the neutralization vessel; (c) a hold vessel in fluid communication with an outlet of the vessel and configured to receive a neutralized and partially dewatered crude polyether polyol mixture including catalyst salts from the vessel; (d) a filter in fluid communication with an outlet of the hold vessel, wherein the filter is configured to receive the partially dewatered crude polyether polyol mixture from the hold vessel and configured to produce a filtrate of the neutralized and partially dewatered crude poly ether polyol mixture and separated salt solids; (e) an evaporator in fluid communication with an outlet of the filter, wherein the evaporator is configured to receive the filtrate and remove additional water therefrom under vacuum conditions ; and means for sampling of the purified polyether polyol that is in fluid communication with an outlet of the evaporator, an inlet of the hold vessel and an inlet of the storage vessel for dewatered polyether polyol.

The present invention is also directed to, among other things, polyether polyols produced by such processes and using such systems as well as their use in the manufacture of polyurethanes.

### BRIEF DESCRIPTION OF THE DRAWINGS

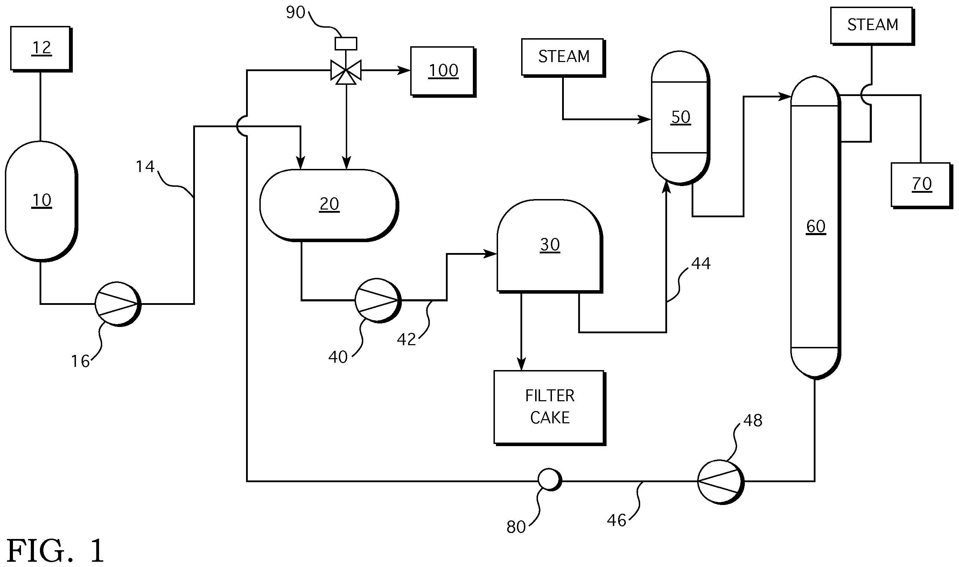

Fig. 1 is an illustration of a process and system of certain embodiments of the present invention.

### DETAILED DESCRIPTION

Various embodiments are described and illustrated in this specification to provide an overall understanding of the structure, function, properties, and use of the disclosed inventions. It is understood that the various embodiments described and illustrated in this specification are non-limiting and non-exhaustive. Thus, the invention is not limited by the description of the various non-limiting and non-exhaustive embodiments disclosed in this specification.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

As indicated, in certain embodiments, the present invention is directed to processes for removing water and salts from a neutralized polyether polyol. The polyether polyols subject to the processes of the present invention can be prepared in accordance with well-known procedures in which one or more alkylene oxides having from 2 to 10 carbon atoms, such as 2 to 6 carbon atoms, in the alkylene radical, and which are optionally substituted, are added to a starter molecule, which contains at least 2, such as 2 to 8, or, in some cases, 2 to 4 active hydrogen atoms, in the presence of an alkaline catalyst. The processes of the present invention are suitable for removing water and alkaline catalyst salts from a wide range of polyether polyols, in terms of their functionality, molecular weight and OH number.

Suitable alkylene oxides include, but are not limited to, butylene oxide, styrene oxide, ethylene oxide and propylene oxide. The alkylene oxides may be used individually, sequentially or as mixtures of two or more thereof.

Suitable starter molecules include, for example: aliphatic and aromatic N-mono-, N,N- and N,N'-dialkyl substituted diamines with 1 to 4 carbon atoms in the alkyl radical, such as mono- and dialkyl substituted ethylenediamine, diethylenetriamine, triethylene-tetramine, 1,3-propylenediamine, 1,3- and/or 1,4-butylenediamine, 1,2-, 1,3-, 1,4-, 1,5- and 1,6-hexamethylenediamine, phenylenediamine, 2,4- and 2,6-toluenediamine, 4,4'-, 2,4- and 2,2'-diaminodiphenylmethane and mixtures of diaminodiphenylmethanes, etc.

Other suitable starter molecules include alkanolamines, such as ethanolamine, diethanolamine, N-methyl- and N-ethyl alkanolamines, such as N-methyl- and N-ethyl-diethanolamine and triethanolamine, ammonia, etc. In some embodiments, the starter molecules include monofunctional compounds such as, for example, butyl carbitol, and multifunctional, particularly bi- and/or trifunctional compounds such as, for example, water, ethylene glycol, 1,2-propylene glycol and trimethylene glycol, diethylene glycol, dipropylene glycol, 1,4-butanediol, 1,6-hexamethylene glycol, glycerine, trimethylol-propane, pentaerythritol, sorbitol and sucrose. The starter molecules may be used individually or as mixtures.

An alkaline catalyst is used in the preparation of the polyether polyol that is subject to the processes of the present invention. Examples of such catalysts are alkali alkoxides with 1 to 4 carbon atoms in the alkyl radical, such as, but not limited to, sodium methylate, sodium and potassium ethylate, potassium isopropylate and sodium butylate, and alkali hydroxides, such as sodium hydroxide and potassium hydroxide. Such catalysts may be used individually or as mixtures of two or more thereof. In certain embodiments, the catalyst is used in an amount of 0.01 to 5 weight percent, 0.2 to 3 weight percent, or, in some cases, 0.1 to 1.0 weight percent, based on the overall weight of the total charge.

In embodiments of the processes of the present invention, the alkaline catalyst is neutralized in the presence of water. In certain embodiments of the processes of the present invention, prior to any distillation, water is present in an amount of at least 1% by weight, at least 3% by weight, or, in some cases, at least 4% by weight and up to 15% by weight, such as up to 13% by weight, up to 10% by weight, or up to 8% by weight, based on the total weight of polyether polyol present.

The processes of the present invention will now be described with reference to Fig. 1.

According to the processes of the present invention, a neutralizing agent is added, from source **12,** to a neutralization vessel **10** comprising: (i) polyether polyol, (ii) water, and (iii) alkaline catalyst. In certain embodiments, the neutralizing agent comprises an acid. Examples of suitable acids to be used as neutralizing agents in the present invention include sulfuric acid, phosphoric acid, carbonic acid, lactic acid and tartaric acid. The amount of acid employed is, in certain embodiments, from 0.3 to 1.1 equivalents of acid per equivalent of alkaline catalyst, such as 0.6 to 1.0 equivalent of acid per equivalent of alkaline catalyst.

It is also possible to use an adsorbent to neutralize the alkaline polymerizate instead of or in addition to the acid neutralization. Adsorbents are also effective in removing alkaline and any excess acid present in the crude polyether polyol. Examples of acid-adsorbents include oxides, carbonates, hydroxides and silicates of Ca, Mg, Al and their complexes such as MgCO₃, CaCO₃, .5MgO·Al₃·xH₂O, Mg₆Al₂(OH)₁₆CO₃·4H₂O, synthetic magnesium silicate, calcium silicate and synthetic aluminum silicate. Examples of alkali-adsorbents include synthetic magnesium silicate, synthetic aluminum silicate, activated bentonite, acid bentonite and their mixtures.

In the processes of the present invention, a portion of the water is removed from the neutralized polyether polyol in the neutralization vessel 10 under at least atmospheric pressure to produce a neutralized and partially dewatered crude polyether polyol mixture in the neutralization vessel **10.** Prior to this at least atmospheric distillation, the acid number of the crude polyol mixture is adjusted to within the range of 0.005 to 1.0 mg KOH/gram (when measured according to ASTM D7253-06(2011) e1). Since this at least atmospheric distillation step may require a period of up to 18 hours, such as 2 to 8, or 4 to 18 hours, the acid number is usually monitored after the initial charge of the neutralizing agent and after any acid/base adjustments.

This at least atmospheric distillation step removes a portion of the water from the neutralization vessel **10** under at least atmospheric pressure. As used herein, "atmospheric pressure" is synonymous with barometric pressure and refers to the pressure exerted by the weight of the atmosphere in the location in which the neutralization vessel **10** is disposed. In certain embodiments, for this at least atmospheric distillation, the temperature of the vessel **10** contents is maintained within the range of 100 to 130°C, such as 100 to 120°C. In certain embodiments, the pressure of the neutralization vessel **10** during this step rises above atmospheric pressure, such as up to 15 psig (1 atmosphere gage).

As indicated, at least the atmospheric distillation of the processes of the present invention produces a neutralized and partially dewatered crude polyether polyol mixture in the neutralization vessel **10.** As used herein, the term "neutralized" means that the acid number of the crude polyol mixture is adjusted to within the range 0.005-1.0 mg KOH/gram (measured as described above). As used herein, the term "at least partially dewatered" means that at least 50% by weight, in some cases, at least 70% by weight, at least 80% by weight, or, in yet other cases at least 90% by weight of the water in the crude polyether polyol mixture is removed during the at least atmospheric distillation. In some embodiments of the present invention, following the at least atmospheric distillation step, water is present in an amount of at least 0.1 to 2% by weight, such as at least 0.2 to 1% by weight, or, in some cases, 0.3 to 0.7% by weight, based on the total weight of polyether polyol present.

As indicated above, the processes of the present invention comprise transferring the neutralized and partially dewatered crude polyether polyol mixture from the neutralization vessel **10** to a hold vessel **20.** As depicted in Fig. 1, such transfer occurs via line **14** using pump **16.**

Next, in accordance with the processes of the present invention, the neutralized and partially dewatered crude polyether polyol mixture is transferred from the hold vessel **20** through a filter **30** to produce a filtrate of the neutralized and partially dewatered crude polyether polyol mixture and a solid salt of the catalyst which is to be discarded. In certain embodiments, and as depicted in Fig. 1, such transfer occurs using pump **40** via line **42.**

Filters **30** suitable for use in the processes of the present invention include any device that separates solids from liquid including, without limitation, various screens, metal discs, candle filters, membrane filters, Schenk filters, Rosemond filters, among others. The filter **30** removes solid particles, such as salt precipitates, from the neutralized and partially dewatered crude polyether polyol mixture and produces a filtrate, which is substantially or completely free of such solids, of the neutralized and partially dewatered crude polyether polyol mixture.

If desired, filtration agents such as perlite, Kieseluhr and diatomaceous earths can be used. If filtration agents are used, they are normally applied in amounts of 0.05 to 5.0 part by weight, per 100 parts by weight of the neutralized and partially dewatered crude polyether polyol mixture.

As depicted in Fig. 1, in certain embodiments of the present invention, the filtrate of the neutralized and partially dewatered crude polyether polyol mixture travels via line **44** to a preheater **50.** Preheater **50,** in these embodiments, heats the filtrate prior to the filtrate entering evaporator **60.** In some embodiments of the present invention, the preheater heats the filtrate from 70°C up to 140°C.

In the processes of the present invention, and as illustrated in Fig. 1, the filtrate is passed through an evaporator **60** to remove additional water from the filtrate under vacuum. Transition to the vacuum distillation step consists of reducing the pressure to the range of 50 mmHg to 5 mmHg, and, in some embodiments, to temperatures ranging from 100 to 140°C.

Suitable evaporators **60** for use in the present invention include, without limitation, single volume jacketed evaporators that can be operated either as a falling film evaporator or a wiped-film evaporator. The vacuum source **70** can be attached to the head area of the evaporator **60,** as is depicted in Fig. 1, to remove water vapor and reduce the pressure of the volume of the evaporator **60** to facilitate water removal from the filtrate.

In certain embodiments, the evaporator **60** produces a dewatered polyether polyol which is transferred, in the embodiment illustrated in Fig. 1, by pump **48.** As used herein, the term "dewatered" means that the polyether polyol exiting the evaporator has a water content of no more than a predetermined water content, such as no more than 10,000 ppm, no more than 1,000 ppm, or no more than 500 ppm (when measured according to ASTM D4672 (2012)).

As shown in Fig. 1, the dewatered polyether polyol, in certain embodiments of the present invention can be recycled back to the hold vessel **20.** In particular, as also shown in Fig. 1, in certain embodiments, the dewatered polyether polyol is conveyed, using pump **48** via line **46** to sampling point **80,** which may be a port for manual sampling of the dewatered polyether polyol or may be equipment for in-line sampling and test of the dewatered polyether polyol for water content and/or alkalinity. In certain embodiments of the processes of the present invention, the purified polyether polyol is recirculated to the hold vessel **20,** via proper positioning of 3-way valve **90,** if the purified polyether polyol does not meet specification for water content and alkalinity. By contrast, in these embodiments, the dewatered polyether polyol is transferred to storage **100,** by proper position of 3-way valve **90,** if the purified polyether polyol has a water content of less than or equal to the predetermined water content, such as any of those described in the previous paragraph and an alkalinity of no more than a predetermined alkalinity content, such as 0.04% (when measured according to ASTM D6979 (2013)).

Time is saved in the parallel process of the present invention by the combination of purification steps. As a result of recycling the filtrate back to the hold vessel 20, distillation rates can be increased. Therefore the processes of the present invention have reduced processing times relative to batch processes, without jeopardizing the quality of the poly ether polyol product, thus allowing for the purification of more poly ether polyol in a given time period.

As will also be appreciated from the foregoing description, the present invention is also directed to systems for removing water and alkaline catalyst salts from a polyether polyol. With reference again to Fig. 1, it is seen that these systems comprise: (a) a neutralization vessel **10** comprising: (i) a polyether polyol, (ii) water, and (iii) alkaline catalyst; (b) a source of neutralizing agent **12,** such as acid, in fluid communication with an inlet of the vessel; (c) a hold vessel **20** in fluid communication with an outlet of the neutralization vessel **10** and configured to receive a neutralized and partially dewatered crude polyether polyol mixture from the neutralization vessel **10;** (d) a filter **30** in fluid communication with an outlet of the hold vessel **20,** wherein the filter **30** is configured to receive the neutralized and partially dewatered crude polyether polyol mixture from the hold vessel **20** and configured to produce a filtrate of the neutralized and partially dewatered crude polyether polyol mixture; (e) an evaporator **60** in fluid communication with an outlet of the filter **30,** wherein the evaporator is configured to receive the filtrate and remove additional water therefrom under vacuum conditions. In certain of these embodiments, an outlet of the evaporator is also in fluid communication with an inlet to the hold vessel **20** and a storage vessel for dewatered polyether polyol **100.** As will also be appreciated, certain such systems of the present invention also comprise a preheater **50** in fluid communication with an outlet of the filter **30** and an inlet of the evaporator **60** and configured to heat the filtrate of the neutralized and partially dewatered crude polyether polyol mixture. Some embodiments of the systems of the present invention also comprise means for sampling **80** of the purified polyether polyol, wherein the means for sampling of the purified polyether polyol is in fluid communication with an outlet of the evaporator **60,** an inlet of the hold vessel **20** and an inlet of the storage vessel for dewatered purified polyether polyol **100.**

### EXAMPLES

### EXAMPLE 1:

The parallel process is shown in Figure 1. The amount of time required to complete the sequential purification process is longer than the amount of time required to complete the parallel purification process. The present invention of parallel processing steps saves purification time by utilizing overlapping steps. Additionally, duration times of the individual steps, especially in the vacuum distillation and filtering steps, are significantly reduced because of recycling. The overall time savings of the parallel process as compared to the sequential process can be as great as 50%.

### EXAMPLE 2:

Polyether Polyol A: a polyether polyol prepared from 100% propylene oxide, potassium hydroxide catalyst, propylene glycol starter, sulfuric acid neutralizing agent, having an OH number of 56 and a functionality of 2.
Polyether Polyol B: a polyether polyol prepared from 100% propylene oxide, potassium hydroxide catalyst, trimethylolpropane starter, sulfuric acid neutralizing agent, having an OH number of 550 and a functionality of 3.
Polyether Polyol C: a polyether polyol prepared from 100% propylene oxide, potassium hydroxide catalyst, propylene glycol starter, sulfuric acid neutralizing agent, having an OH number of 112 and a functionality of 2.
Polyether Polyol D: a polyether polyol prepared from 100% propylene oxide, potassium hydroxide catalyst, glycerine starter, sulfuric acid neutralizing agent, having an OH of 250 and a functionality of 3.
Polyether Polyol E: a polyether polyol prepared from 100% propylene oxide, potassium hydroxide catalyst, glycerine starter, sulfuric acid neutralizing agent, having an OH number of 470 and a functionality of 3.

Table 1 below illustrates the process times for 5 different polyether polyols, A-E, as described above. "Sequential" and "Parallel" processes have been previously defined. This Table demonstrates that there is a significant reduction of in purification time with the use of the parallel process. The average purification time for Polyether polyols A, B, D and E was reduced by 36% reduction when the parallel process was used in comparison to when the sequential process was used.

**Table 1: Comparison of Processing Times for Polyether Polyols**

| | Cycle Time (Hrs) for Sequential Process | Cycle Time (Hrs) for Parallel Process |
|---|---|---|
| Polyether Polyol A | 33 | 19 |
| Polyether Polyol B | 26 | 18 |
| Polyether Polyol C | 34 | 29 |
| Polyether Polyol D | 28 | 15 |
| Polyether Polyol E | 19 | 14 |

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant(s) reserve the right to amend the claims during prosecution to add features as variously described in this specification, and such amendments comply with the requirements of 35 U.S.C. § 112, first paragraph, and 35 U.S.C. § 132(a).

## Claims

1. A process for removing water and salt from a neutralized polyether polyol, comprising:
(a) removing a portion of the water from the neutralized polyether polyol under at least atmospheric pressure to produce a neutralized and partially dewatered crude polyether polyol mixture in a neutralization vessel;
(b) transferring the neutralized and partially dewatered crude polyether polyol mixture from the neutralization vessel to a hold vessel;
(c) transferring the neutralized and partially dewatered crude polyether polyol mixture from the hold vessel through a filter to produce a filtrate of the at least partially neutralized and partially dewatered crude polyether polyol mixture;
(d) passing the filtrate through an evaporator to remove additional water from the filtrate under vacuum
and
recirculating the polyether polyol exiting the evaporator to the hold vessel if the polyether polyol has a water content of more than a predetermined value, preferably 500 ppm when measured according to ASTM D4672 (2012).

2. The method claim 1, further comprising passing the filtrate of the neutralized and partially dewatered crude polyether polyol mixture through a preheater prior to passing the mixture through the evaporator.

3. The method of claim 2, further comprising transferring the polyether polyol exiting the evaporator to a storage vessel if the polyether polyol has a water content of no more than a predetermined water content and an alkalinity of no more than a predetermined alkalinity content.

4. The method of claim 1, wherein the neutralizing agent comprises an acid.

5. The method of claim 1, wherein, prior to step (a) water is present in an amount of at least 1% by weight and up to 15% by weight, based on the total weight of polyether polyol present.

6. The method of claim 1, wherein step (a) occurs over a period of 4 to 18 hours.

7. The method of claim 1, wherein the temperature of the vessel contents during step (a) is in the range of 90 to 120°C.

8. The method of claim 6, wherein, during step (a), at least 50% by weight, preferably at least 80% by weight, of the water present in the vessel contents is removed.

9. The method of claim 1, wherein step (d) occurs at a pressure in the range of 50 to 5 mmHg absolute pressure.

10. The method of claim 9, wherein step (d) occurs at a temperature of 100 to 140°C.

11. The method of claim 10, wherein the evaporator is a falling film evaporator or a wiped-film evaporator.

12. The method of claim 11, wherein step (d) produces a dewatered polyether polyol having a water content of no more than 500 ppm when measured according to ASTM D4762 (2012) and wherein the dewatered polyether polyol has an alkalinity of no more than 0.04% when measured according to ASTM D6979 (2013).

13. A system for removing water and alkaline catalyst from a polyether polyol, comprising:
(a) a neutralization vessel comprising:
(i) a polyether polyol,
(ii) water, and
(iii) alkaline catalyst;
(b) a source of neutralizing agent in fluid communication with an inlet of the neutralization vessel;
(c) a hold vessel in fluid communication with an outlet of the neutralization vessel and configured to receive a neutralized and partially dewatered crude polyether polyol mixture from the vessel;
(d) a filter in fluid communication with an outlet of the hold vessel, wherein the filter is configured to receive the partially dewatered crude polyether polyol mixture from the hold vessel and configured to produce a filtrate of the neutralized and partially dewatered crude polyether polyol mixture;
(e) an evaporator in fluid communication with an outlet of the filter,
wherein the evaporator is configured to receive the filtrate and remove additional water therefrom under vacuum conditions; and
means for sampling of the purified polyether polyol that is in fluid communication with an outlet of the evaporator, an inlet of the hold vessel and an inlet of the storage vessel for dewatered polyether polyol.

14. The system of claim 13, wherein:
(1) an outlet of the evaporator is in fluid communication with an inlet to the hold vessel and to a storage vessel for dewatered polyether polyol; and
(2) the system further comprises a preheater in fluid communication with an outlet of the filter and an inlet of the evaporator and configured to heat the filtrate of the neutralized and partially dewatered crude polyether polyol mixture.

## Patentansprüche

1. Verfahren zur Entfernung von Wasser und Salz aus einem neutralisierten Polyetherpolyol, das Folgendes umfasst:
(a) Entfernen eines Teils des Wassers aus dem neutralisierten Polyetherpolyol unter mindestens Atmosphärendruck zur Herstellung eines neutralisierten und teilweise entwässerten Rohpolyetherpolyolgemischs in einem Neutralisationsgefäß;
(b) Überführen des neutralisierten und teilweise entwässerten Rohpolyetherpolyolgemischs aus dem Neutralisationsgefäß in ein Vorratsgefäß;
(c) Überführen des neutralisierten und teilweise entwässerten Rohpolyetherpolyolgemischs aus dem Vorratsgefäß über ein Filter zur Herstellung eines Filtrats des neutralisierten und teilweise entwässerten Rohpolyetherpolyolgemischs;
(d) Führen des Filtrats durch einen Verdampfer zur Entfernung von zusätzlichem Wasser aus dem Filtrat unter Vakuum und
Rezyklieren des aus dem Verdampfer austretenden Polyetherpolyols in das Vorratsgefäß, wenn das Polyetherpolyol bei Messung gemäß ASTM D4672 (2012) einen Wassergehalt von mehr als einem vorbestimmten Wert, vorzugsweise 500 ppm, aufweist.

2. Verfahren nach Anspruch 1, ferner umfassend das Führen des Filtrats des neutralisierten und teilweise entwässerten Rohpolyetherpolyolgemischs durch einen Vorerhitzer vor dem Führen des Gemischs durch den Verdampfer.

3. Verfahren nach Anspruch 2, ferner umfassend das Überführen des aus dem Verdampfer austretenden Polyetherpolyols in das Vorratsgefäß, wenn das Polyetherpolyol einen Wassergehalt von nicht mehr als einem vorbestimmten Wassergehalt und eine Alkalinität von nicht mehr als einem vorbestimmten Alkalinitätsgehalt aufweist.

4. Verfahren nach Anspruch 1, wobei das Neutralisationsmittel eine Säure umfasst.

5. Verfahren nach Anspruch 1, wobei vor Schritt (a) Wasser in einer Menge von mindestens 1 Gew.-% und bis zu 15 Gew.-%, bezogen auf das Gesamtgewicht des vorliegenden Polyetherpolyols, vorliegt.

6. Verfahren nach Anspruch 1, wobei Schritt (a) über einen Zeitraum von 4 bis 18 Stunden erfolgt.

7. Verfahren nach Anspruch 1, wobei die Temperatur des Gefäßinhalts während Schritt (a) im Bereich von 90 bis 120 °C liegt.

8. Verfahren nach Anspruch 6, wobei während Schritt (a) mindestens 50 Gew.-%, vorzugsweise mindestens 80 Gew.-% des in dem Gefäßinhalt vorliegenden Wassers entfernt werden.

9. Verfahren nach Anspruch 1, wobei Schritt (d) bei einem Druck im Bereich von 50 bis 5 mmHg Absolutdruck erfolgt.

10. Verfahren nach Anspruch 9, wobei Schritt (b) bei einer Temperatur von 100 bis 140 °C erfolgt.

11. Verfahren nach Anspruch 10, wobei es sich bei dem Verdampfer um einen Fallfilmverdampfer oder einen Wischfilmverdampfer handelt.

12. Verfahren nach Anspruch 11, wobei in Schritt (d) ein entwässertes Polyetherpolyol mit einem Wassergehalt von nicht mehr als 500 ppm bei Messung gemäß ASTM D4762 (2012) erhalten wird und wobei das entwässerte Polyetherpolyol eine Alkalinität von nicht mehr als 0,04 % bei Messung gemäß ASTM D6979 (2013) aufweist.

13. System zur Entfernung von Wasser und alkalischem Katalysator aus einem Polyetherpolyol, umfassend:
(a) ein Neutralisationsgefäß, umfassend:
(i) ein Polyetherpolyol,
(ii) Wasser und
(iii) alkalischen Katalysator;
(b) eine Neutralisationsmittelquelle, die mit einem Einlass des Neutralisationsgefäßes in Fließverbindung steht;
(c) ein Vorratsgefäß, das mit einem Auslass des Neutralisationsgefäßes in Fließverbindung steht und so ausgelegt ist, dass es ein neutralisiertes und teilweise entwässertes Rohpolyetherpolyolgemisch aus dem Gefäß empfängt;
(d) ein Filter, das mit einem Auslass des Vorratsgefäßes in Fließverbindung steht, wobei das Filter so ausgelegt ist, dass es das teilweise entwässerte Rohpolyetherpolyolgemisch aus dem Vorratsgefäß empfängt, und so ausgelegt ist, dass es ein Filtrat des neutralisierten und teilweise entwässerten Rohpolyetherpolyolgemischs erzeugt;
(e) einen Verdampfer, der mit einem Auslass des Filters in Fließverbindung steht, wobei der Verdampfer so ausgelegt ist, dass er das Filtrat empfängt und unter Vakuumsbedingungen zusätzliches Wasser daraus entfernt; und
ein Mittel zur Entnahme von Proben des gereinigten Polyetherpolyols, das mit einem Auslass des Verdampfers, einem Einlass des Vorratsgefäßes und einem Einlass des Lagergefäßes für entwässertes Polyetherpolyol in Fließverbindung steht.

14. System nach Anspruch 13, wobei:
(1) ein Auslass des Verdampfers mit einem Einlass in das Vorratsgefäß und in ein Lagergefäß für entwässertes Polyetherpolyol in Fließverbindung steht und
(2) das System ferner einen Vorerhitzer umfasst, der mit einem Auslass des Filters und einem Einlass des Verdampfers in Fließverbindung steht und so ausgelegt ist, dass er das Filtrat des neutralisierten und teilweise entwässerten Rohpolyetherpolyolgemischs erhitzt.

## Revendications

1. Procédé pour l'élimination d'eau et de sel d'un polyéther polyol neutralisé, comprenant :
(a) l'élimination d'une partie de l'eau du polyéther polyol neutralisé sous une pression au moins atmosphérique pour produire un mélange de polyéther polyol brut neutralisé et partiellement déshydraté dans une cuve de neutralisation ;
(b) le transfert du mélange de polyéther polyol brut neutralisé et partiellement déshydraté de la cuve de neutralisation à une cuve d'attente ;
(c) le transfert du mélange de polyéther polyol brut neutralisé et partiellement déshydraté de la cuve d'attente à travers un filtre pour produire un filtrat du mélange de polyéther polyol brut au moins partiellement neutralisé et partiellement déshydraté ;
(d) le passage du filtrat à travers un évaporateur pour éliminer sous vide de l'eau supplémentaire du filtrat
et
la recirculation du polyéther polyol sortant de l'évaporateur à la cuve d'attente si le polyéther polyol possède une teneur en eau supérieure à une valeur prédéterminée, préférablement 500 ppm lorsqu'elle est mesurée selon la norme ASTM D4672 (2012).

2. Procédé selon la revendication 1, comprenant en outre le passage du filtrat du mélange de polyéther polyol brut neutralisé et partiellement déshydraté à travers un préchauffeur avant le passage du mélange à travers l'évaporateur.

3. Procédé selon la revendication 2, comprenant en outre le transfert du polyéther polyol sortant de l'évaporateur à une cuve de stockage si le polyéther polyol possède une teneur en eau non supérieure à une teneur en eau prédéterminée et une alcalinité non supérieure à une teneur en alcalinité prédéterminée.

4. Procédé selon la revendication 1, l'agent de neutralisation comprenant un acide.

5. Procédé selon la revendication 1, dans lequel, avant l'étape (a), l'eau est présente en une quantité d'au moins 1 % en poids et jusqu'à 15 % en poids, sur la base du poids total de polyéther polyol présent.

6. Procédé selon la revendication 1, l'étape (a) ayant lieu sur une période de 4 à 18 heures.

7. Procédé selon la revendication 1, la température des contenus de la cuve pendant l'étape (a) étant dans la plage de 90 à 120 °C.

8. Procédé selon la revendication 6, dans lequel, pendant l'étape (a), au moins 50 % en poids, préférablement au moins 80 % en poids, de l'eau présente dans les contenus de la cuve sont éliminés.

9. Procédé selon la revendication 1, l'étape (d) ayant lieu à une pression dans la plage de 50 à 5 mm Hg de pression absolue.

10. Procédé selon la revendication 1, l'étape (d) ayant lieu à une température de 100 à 140 °C.

11. Procédé selon la revendication 10, l'évaporateur étant un évaporateur à film tombant ou un évaporateur à film essuyé.

12. Procédé selon la revendication 11, l'étape (d) produisant un polyéther polyol déshydraté possédant une teneur en eau non supérieure à 500 ppm lorsqu'elle est mesurée selon la norme ASTM D4762 (2012) et le polyéther polyol déshydraté possédant une alcalinité non supérieure à 0,04 % lorsqu'elle est mesurée selon la norme ASTM D6979 (2013).

13. Système pour l'élimination d'eau et d'un catalyseur alcalin d'un polyéther polyol, comprenant :
(a) une cuve de neutralisation comprenant :
(i) un polyéther polyol,
(ii) de l'eau, et
(iii) un catalyseur alcalin ;
(b) une source d'agent de neutralisation en communication fluidique avec une entrée de la cuve de neutralisation ;
(c) une cuve d'attente en communication fluidique avec une sortie de la cuve de neutralisation et configurée pour recevoir un mélange de polyéther polyol brut neutralisé et partiellement déshydraté de la cuve ;
(d) un filtre en communication fluidique avec une sortie de la cuve d'attente, le filtre étant configuré pour recevoir le mélange de polyéther polyol brut partiellement déshydraté de la cuve d'attente et configuré pour produire un filtrat du mélange de polyéther polyol brut neutralisé et partiellement déshydraté ;
(e) un évaporateur en communication fluidique avec une sortie du filtrat, l'évaporateur étant configuré pour recevoir le filtrat et éliminer de l'eau supplémentaire de celui-ci dans des conditions de vide ; et
un moyen pour l'échantillonnage du polyéther polyol purifié qui est en communication fluidique avec une sortie de l'évaporateur, une entrée de la cuve d'attente et une entrée de la cuve de stockage pour le polyéther polyol déshydraté.

14. Système selon la revendication 13,
(1) une sortie de l'évaporateur étant en communication fluidique avec une entrée à la cuve d'attente et à la cuve de stockage pour le polyéther polyol déshydraté ; et
(2) le système comprenant en outre un préchauffeur en communication fluidique avec une sortie du filtre et une entrée de l'évaporateur et configuré pour chauffer le filtrat du mélange de polyéther polyol brut neutralisé et partiellement déshydraté.
